# EUROPÄISCHE PATENTANMELDUNG

(11) **EP 1 457 711 A2**
(43) Veröffentlichungstag der Anmeldung: **15.09.2004**
(21) Anmeldenummer: 04005517.0
(22) Anmeldetag: 09.03.2004
(51) Int. Cl.: F16H 45/02

(54) **Überbrückungskupplung für einen hydrodynamischen Drehmomentwandler**

(30) Priorität: 11.03.2003 DE 10310423
(71) Anmelder: ZF Sachs AG, 97424 Schweinfurt (DE)
(72) Erfinder: Sudau, Jörg, Dipl.-Ing., 97464 Niederwerrn (DE)

(57) **Zusammenfassung**

Eine Überbrückungskupplung (56) für einen hydrodynamischen Drehmomentwandler (1) ist mit zumindest einem an einem ersten Wandlerbauteil vorgesehenen Reibbereich ausgebildet, der durch eine Einrückbewegung mit wenigstens einem an einem zweiten Wandlerbauteil vorgesehenen Gegenreibbereich in Wirkverbindung versetzbar oder durch eine der Einrückbewegung entgegengerichtete Ausrückbewegung von diesem Gegenreibbereich trennbar ist. Wenigstens eines der beiden Wandlerbauteile ist als Reibbelagträger wirksam und nimmt im Reibbereich oder im Gegenreibbereich jeweils einen Reibbelag mit wenigstens einer zum Durchgang von Fördermedium dienenden Aussparung auf, deren Zuflussbereich an der gleichen Radialseite des Reibbelags (65) wie deren Abflussbereich mündet. An zumindest einem der als Reibbelagträger (66) dienenden Wandlerbauteile (7,54,132) ist wenigstens ein Reibbelag (68) mit einer Aussparung versehen, die an der den Zuflussbereich und den Abflussbereich aufweisenden Radialseite des Reibbelags entlang ihrer gesamten Erstreckungsweite in Umfangsrichtung durchgängig offen ist.

## Beschreibung

Die Erfindung betrifft eine Überbrückungskupplung gemäß dem Oberbegriff des Anspruches 1.

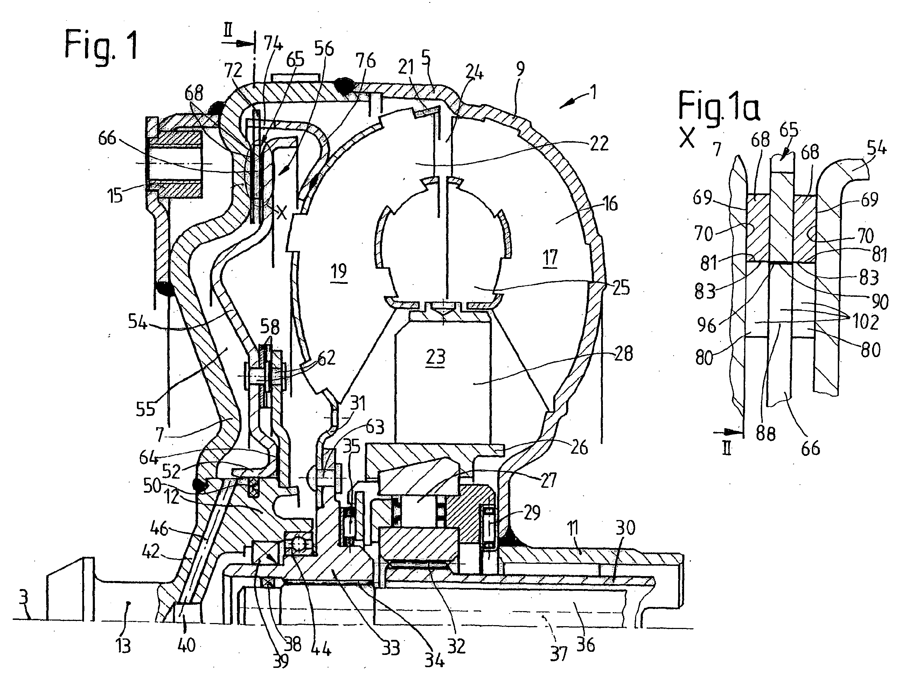

Aus der DE 100 08 167 A1 ist eine Überbrückungskupplung für einen hydrodynamischen Drehmomentwandler bekannt, die über einen Kolben verfügt, der gemäß Figur 1 an seiner einem Wandlerdeckel zugewandten Seite mit einem ersten Reibbelag in Wirkverbindung bringbar ist, der an einer Seite einer mit dem Turbinenrad des Drehmomentwandlers drehfesten Lamelle befestigt ist. Die Lamelle trägt an ihrer entgegengesetzten, einem Wandlerdeckel zugewandten Seite einen zweiten Reibbelag, der ebenso wie der erste Reibbelag als Reibbereich dient. Der Kolben ist zum Einrücken der Überbrückungskupplung in Richtung des Wandlerdeckels bewegbar oder aber zum Ausrücken in Gegenrichtung verlagerbar. Sobald der Reibbereich des ersten Reibbelages am Kolben und der Reibbereich des zweiten Reibbelags am Wandlerdeckel in Anlage kommt, dienen Kolben und Wandlerdeckel mit ihren entsprechenden Anlageflächen als Gegenreibbereiche. Der Kolben ist als erstes Wandlerbauteil, der Wandlerdeckel als zweites Wandlerbauteil und die Lamelle als drittes Wandlerbauteil der Überbrückungskupplung wirksam.

Sobald die Überbrückungskupplung zumindest im wesentlichen eingerückt ist, wird eine Rotationsbewegung des Wandlergehäuses um dessen Drehachse nicht mehr über einen hydrodynamischen Kreis mit Pumpenrad, Turbinenrad und Leitrad auf eine Getriebeeingangswelle übertragen, sondern gelangt mittels der Überbrückungskupplung direkt auf die letztgenannte Welle.

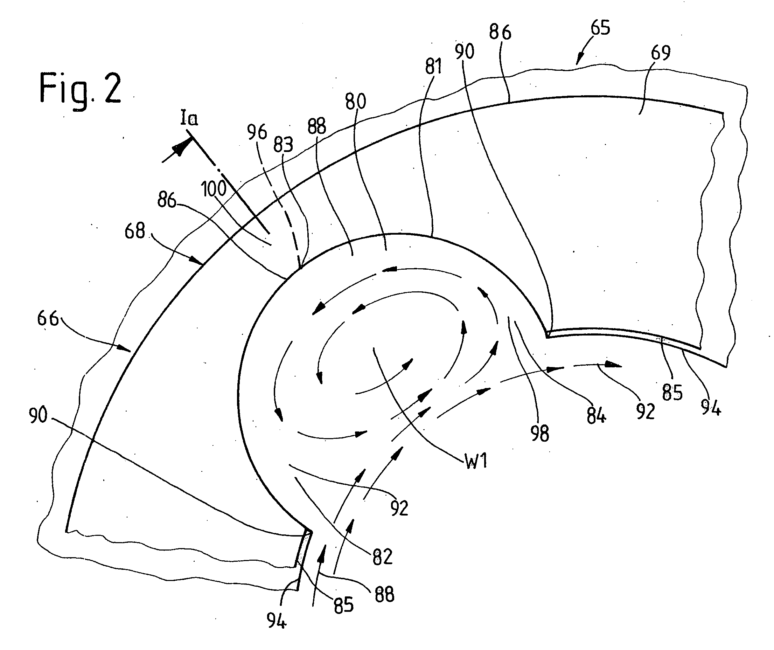

Der Einsatz der Überbrückungskupplung mag aus energetischer Sicht von Vorteil sein, jedoch ist in diesem Betriebszustand die Überbrückungskupplung, sollten zusammen mit dem eingeleiteten Drehmoment Torsionsschwingungen Eingang finden, zur Dämpfung der Letztgenannten heranzuziehen. Aus diesem Grund wird der Kolben der Überbrückungskupplung bei Ausführung derselben ohne einen Torsionsschwingungsdämpfer durch Minderung der zum Wandlerdeckel gerichteten Anpresskraft für eine gewünschte Schlupfbewegung entlastet, die zwar zu einer wirksamen Dämpfung eingeleiteter Torsionsschwingungen dienen mag, dafür aber eine erhebliche Aufheizung im Reib- sowie im Gegenreibbereich entstehen lässt. Es muss also dafür Sorge getragen werden, dass die entstandene Wärme möglichst rasch aus dem Wirkbereich der Überbrückungskupplung entfernt werden kann. Bei der vorliegenden Offenlegungsschrift erfolgt dies durch Ausbildung von Aussparungen in den Reibbelägen, wobei diese vorzugsweise gemäß Figur 2 der Offenlegungsschrift derart ausgebildet sind, dass deren radiale Außenkontur sich, ausgehend von einem Scheitelpunkt, in einander entgegengesetzten Richtungen im wesentlichen nach radial innen erstreckt und sich dort sowohl mit ihrem Zuflussbereich als auch mit ihrem Abflussbereich nach radial innen öffnet. Die radiale Innenkontur der als Nutungen ausgebildeten Aussparungen ist der radialen Außenkontur geometrisch nachgeführt. Eine derart ausgebildete nutförmige Aussparung in Reibbelägen ist in Fachkreisen als "Bogennut" bezeichnet.

Eine Überprüfung derartiger Aussparungen in Reibbelägen einer Überbrückungskupplung hat zu folgenden Erkenntnissen geführt:

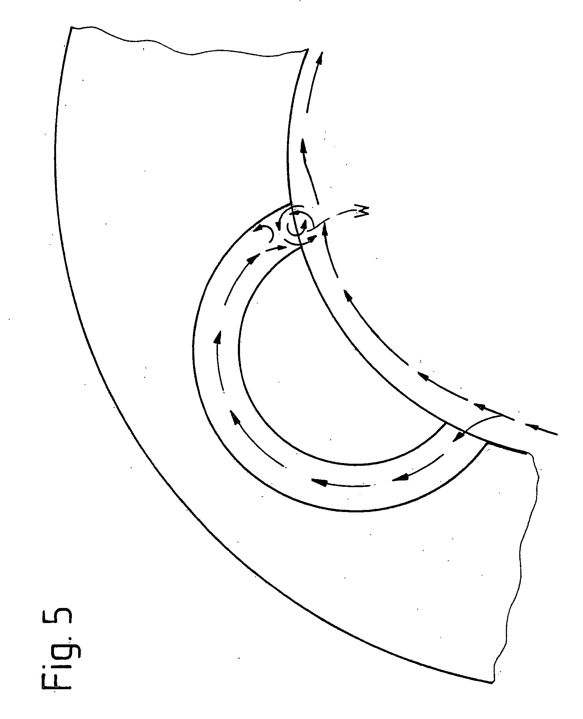

Aufgrund der Relativdrehbewegung der mit Reibfläche oder Gegenreibfläche ausgebildeten Wandlerbauteile zueinander wird Fördermedium in den jeweiligen Zuflussbereich einer jeden Aussparung einströmen und danach in Richtung zum Abflussbereich weiterströmen. Hierbei wird allerdings ein Teil des Fördermediums sowohl an der radialen Außenkontur der Aussparung als auch an deren radialer Innenkontur anhaften, sodass sich konturnahe Grenzschichten mit starkem Geschwindigkeitsgefälle bilden. Aufgrund von Geschwindigkeitsdifferenzen zwischen den Grenzschichten der radialen Außenkontur und der radialen Innenkontur kommt es zur Ausbildung eines Wirbels, der sich, wie Untersuchungen ergeben haben und in der den Stand der Technik darstellenden Fig. 5 der vorliegenden Patentanmeldung gezeigt ist, sich im Wesentlichen jeweils im Abflussbereich einer Aussparung ausbildet. lm Erstreckungsbereich dieses Wirbels ist zwar im Wesentlichen kühles Fördermedium konzentriert, was einen hervorragenden Wärmeaustausch begünstigen würde, jedoch wird durch diesen Wirbel der Abflussbereich der Aussparung zumindest verengt, wenn nicht gar versperrt. Die Folge hiervon ist, dass erhitztes, in der Aussparung enthaltenes Fördermedium nicht in hinreichender Menge die Aussparung an deren Abflussbereich verlassen kann und demnach im Zuflussbereich der Aussparung auch kein kühles Fördermedium einzutreten vermag. Statt dessen wird der überwiegende Teil dieses Fördermediums die Aussparung radial innerhalb derselben passieren und, nach Umströmung des erwähnten Wirbels, zu der in Umfangsrichtung benachbarten Aussparung weiterströmen. Verständlicherweise ist hierdurch der Kühlungseffekt nicht nur sehr ungleichmäßig, sondern auch auf ein Minimum reduziert.

Der Erfindung liegt die Aufgabe zugrunde, den Reibbereich der Überbrückungskupplung eines hydrodynamischen Drehmomentwandlers derart auszubilden, dass bei gutem, energetischen Wirkungsgrad eine hohe und gleichmäßige Kühlwirkung im Reibbereich gewährleistet ist.

Diese Aufgabe wird erfindungsgemäß durch die im Kennzeichen des Anspruches 1 angegebenen Merkmale gelöst. Durch die Maßnahme, an zumindest einem der als Reibbelagträger dienenden Wandlerbauteile wenigstens einen Reibbelag mit einer Aussparung zu versehen, die an der den Zuflussbereich und Abflussbereich aufweisenden Radialseite des Reibbelags entlang ihrer gesamten Erstreckungsweite in Umfangsrichtung durchgängig offen ist, wird der Effekt erzielt, dass in einer Grenzschicht ein Teil des über den Zuflussbereich der Aussparung eingetretenen Fördermediums an der radialen Außenkontur der Aussparung anhaftet und dadurch ein Geschwindigkeitsgefälle entsteht, wobei die Strömungsgeschwindigkeit, ausgehend von der Grenzschicht, in Richtung nach radial innen anwächst, was die Ausbildung eines Wirbels begünstigt. Wegen der entlang ihrer gesamten Erstreckungsweite in Umfangsrichtung durchgängig offenen Ausführung der Aussparung kann sich dieser Wirbel über einen vergleichsweise großen Bereich der Aussparung ausdehnen oder, bei besonders günstigen Strömungsbedingungen, die Aussparung sogar vollständig ausfüllen. Da durch einen derartigen Wirbel stets kühles Fördermedium nachgesaugt wird, und Turbulenzen bekanntermaßen einen hervorragenden Wärmeaustausch begünstigen, wird aufgrund der erfindungsgemäßen Ausbildung der Aussparung sehr viel Wärme vom Reibbereich aufgenommen, durch den Wirbel nach radial innen transportiert und dort an einen den Wirbel und damit die Aussparung radial innerhalb passierenden kühlen Volumenstrom an Fördermedium übergeben. Es haben sich hierbei unterschiedliche Ausführungsformen für den Belagträger in Anpassung an die erfindungsgemäße Aussparung im Reibbelag von Vorteil erwiesen, die im Einzelnen nachfolgend vorgestellt werden sollen:

Bei einer ersten Ausführung ist der Reibbelagträger mit einer Ausnehmung versehen, die sich im Erstreckungsbereich der Aussparung des Reibbelages befindet und bezüglich ihrer Geometrie und ihrer Abmessungen im Wesentlichen an die Aussparung des Reibbelages angepasst ist. Auf diese Weise addiert sich in Achsrichtung die Dicke des Reibbelages mit der Dicke des Reibbelagträgers, sodass ein wesentlich tieferer Raum zur Ausbildung eines Wirbels zur Verfügung steht, als dies allein bei einem Reibbelag der Fall wäre. Da sich die Drehachse des Wirbels im Wesentlichen in der besagten Achsrichtung von Reibbelagträger und Reibbelag erstreckt, lässt sich auf diese Weise eine in Achsrichtung vergleichsweise hohe Wirbelzone mit einem energiereichen Wirbel erzeugen, wodurch sich ein intensiver und zudem gleichmäßiger Wärmeaustausch erzielen lässt. Selbstverständlich würde bei einer Lamelle, deren Reibbelagträger beidseits einen Reibbelag aufweist, und in beiden Reibbelägen vorgesehene Aussparungen nicht nur miteinander, sondern auch mit einer entsprechenden Ausnehmung im Reibbelagträger zur Deckung kommen, die dem Wirbel zur Verfügung stehende Wirkhöhe nochmals vergrößert und damit der Wärmeaustausch weiter verbessert.

Eine andere Ausführung sieht vor, im Reibbelagträger zwar wiederum eine Ausnehmung auszubilden, die sich im Erstreckungsbereich der Aussparung eines oder mehrerer Reibbeläge befindet, jedoch soll die Ausnehmung im Reibbelagträger über kleinere Abmessungen gegenüber den Aussparungen in den Reibbelägen verfügen. Dadurch wird zwar die Wirbelgröße des nachfolgend als "Hauptwirbel" bezeichneten Wirbels im Vergleich zu der zuvor beschriebenen Ausführung um die Drehachse des Wirbels reduziert und damit die Wärmeaustauschmöglichkeit geringer, jedoch werden sich insbesondere an der der jeweiligen Außenkontur einer Aussparung zugewandten Seite dieses Hauptwirbels kleinere "Nebenwirbel" ausbilden, deren Rotationsachse im Wesentlichen parallel zu derjenigen des Hauptwirbels ist, die sich allerdings lediglich über die Tiefe des jeweiligen Reibbelages in Achsrichtung ausdehnen können. Die Nebenwirbel können großflächig mit dem Reibbelagträger in Kontakt kommen, der üblicherweise - anders als die Reibbeläge - aus einem gut wärmeleitenden Werkstoff, wie beispielsweise aus Metall, besteht und daher von den Reibbelägen aufgenommene Wärme hervorragend an die benachbarten Nebenwirbel abgibt.

Bei einer dritten Ausführung wird der Reibbelagträger im Wesentlichen unterbrechungsfrei im Erstreckungsbereich einer Aussparung eines Reibbelages ausgebildet sein, sodass sich der zuvor erläuterte Hauptwirbel nur bedingt ausbilden kann und somit den Nebenwirbeln eine nochmals höhere Bedeutung zukommt.

Mit Vorzug ist die erfindungsgemäße Ausbildung von Aussparungen in Reibbelägen bei einer Aussparungsgeometrie realisiert, welche bezüglich ihrer Außenkontur von einem Scheitelpunkt ausgeht, von dem aus sich die radiale Außenkontur in einander entgegengesetzten Richtungen im Wesentlichen nach radial innen erstreckt und sich dort sowohl mit ihrem Zuflussbereich als auch mit ihrem Abflussbereich nach innen öffnet. Bei einer derartigen Geometrie der Aussparung ergibt sich eine optimale Anpassung an die Gestalt des sich darin ausbildenden Wirbels, was für eine effiziente Wärmeübertragung von erheblichem Vorteil ist. Vorzugsweise wird aus den gleichen Gründen auch die eventuell im Reibbelagträger vorgesehene Ausnehmung die den Aussparungen in den Reibbeläge zugrunde liegende Geometrie aufweisen.

lm Folgenden werden Ausführungsbeispiele der Erfindung anhand einer Zeichnung näher erläutert. Es zeigt:
- Fig. 1: die obere Hälfte eines Längsschnittes durch einen hydrodynamischen Drehmomentwandler mit Überbrückungskupplung, die gemäß einer markierten Einzelheit X axial zwischen einem Wandlerdeckel und einem Kolben der Überbrückungskupplung über eine Lamelle mit einem Reibbelagträger und beidseits daran befestigten Reibbelägen verfügt;
- Fig. 1a: eine vergrößerte Herauszeichnung der Einzelheit X der Fig. 1;
- Fig. 2: eine Draufsicht auf ein Segment des Reibbelags gemäß der Schnittlinie II-II in Fig. 1 mit Darstellung der Strömungsbedingungen von Fördermedium in einer Aussparung im Reibbelag und einer im wesentlichen gleich bemessenen Ausnehmung im Reibbelagträger der Lamelle;
- Fig. 3: wie Fig. 2, aber mit einer gegenüber der Aussparung im Reibbelag kleineren Ausnehmung im Reibbelagträger;
- Fig. 3a: eine Schnittdarstellung durch die Lamelle gemäß der Schnittlinie llla-llla in Fig. 3;
- Fig. 4: wie Fig. 2 oder 3, aber mit einem Reibbelagträger ohne Ausnehmung;
- Fig. 5: eine Darstellung der Strömungsbedingungen von Fördermedium in einer Aussparung gemäß dem Stand der Technik.

In Fig. 1 ist ein hydrodynamischer Drehmomentwandler 1 dargestellt, der um eine Drehachse 3 Rotationsbewegungen auszuführen vermag. Der hydrodynamische Drehmomentwandler 1 verfügt über ein Wandlergehäuse 5, das an seiner einem nicht gezeigten Antrieb, wie beispielsweise einer Brennkraftmaschine, zugewandten Seite einen Wandlerdeckel 7 aufweist, der fest mit einer Pumpenradschale 9 verbunden ist. Diese geht im radial inneren Bereich in eine Pumpenradnabe 11 über.

Zurückkommend auf den Wandlerdeckel 7, weist dieser im radial inneren Bereich eine einen Lagerzapfen 13 tragende Zapfennabe 12 auf, wobei der Lagerzapfen 13 in bekannter und daher nicht näher dargestellter Weise an einem Element des Antriebs, wie beispielsweise einer Kurbelwelle, zur antriebsseitigen Zentrierung des Wandlergehäuses 5 aufgenommen ist. Weiterhin verfügt der Wandlerdeckel 7 über eine Befestigungsaufnahme 15, die üblicherweise zur Befestigung des Wandlergehäuses 5 am Antrieb dient, und zwar vorzugsweise über eine nicht gezeigte Flexplatte. Bezüglich einer zeichnerischen Darstellung der Aufnahme des Lagerzapfens eines Drehmomentwandlers in einer Kurbelwelle eines Antriebs sowie einer Anbindung des Drehmomentwandlers über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über eine Axiallagerung 29 an der Pumpenradnabe 11 axial ab und steht in drehfester, aber axial relativ verschiebbarer Verzahnung 32 mit einer Stützwelle 30, die radial innerhalb der Pumpenradnabe 11 angeordnet ist. Die als Hohlwelle ausgebildete Stützwelle 30 ihrerseits umschließt eine Getriebeeingangswelle 36, die mit einer Mittenbohrung 37 zum Durchgang von Hydraulikflüssigkeit versehen ist. Die Getriebeeingangswelle 36 nimmt über eine Verzahnung 34 eine Turbinennabe 33 drehfest, aber axial verschiebbar auf, wobei diese Turbinennabe 33 in einem radial äußeren Bereich zur Befestigung eines Turbinenradfußes 31 mittels einer Nietverbindung 63 dient. Die Turbinennabe 33 stützt sich einerseits über eine Axiallagerung 35 am bereits genannten Freilauf 27 ab, und kommt andererseits über eine Axiallagerung 44 an der Zapfennabe 12 zur Anlage. Nach radial innen hin ist die Turbinennabe 33 über eine Abdichtung 38 gegenüber der Getriebeeingangswelle 36 abgedichtet, nach radial außen durch eine Abdichtung 39 gegenüber dem Lagerzapfen 12.

Die bereits erwähnte Mittenbohrung 37 in der Getriebeeingangswelle 36 dient zur Versorgung des hydrodynamischen Kreises 24 sowie zur Druckbeaufschlagung einer noch zu erläuternden Überbrückungskupplung 56, wozu eine Verbindung mit einer Steuervorrichtung und einem Hydraulikflüssigkeitsvorrat erforderlich ist. Weder die Steuervorrichtung noch der Hydraulikflüssigkeitsvorrat sind zeichnerisch dargestellt, können aber der Fig. 1 der DE 44 23 640 A1 entnommen werden und sind daher als inhaltlich in die jetzt vorliegende Patentanmeldung aufgenommen zu betrachten.

Über die Mittenbohrung 37 der Getriebeeingangswelle 36 eingeströmte Hydraulikflüssigkeit gelangt in einen Übergangsraum 40 und von diesem über Kanäle 46 der als Strömungsdurchlass 42 dienenden Zapfennabe 12 nach radial außen in eine Kammer 55, die axial zwischen dem Wandlerdeckel 7 und einem Kolben 54 der bereits erwähnten Überbrückungskupplung 56 angeordnet ist. Dieser zentrisch zum Wandlerdeckel 7 angeordnete Kolben 54 ist mit seiner von der Kammer 55 abgewandten Seite dem hydrodynamischen Kreis 24 zugewandt und in Abhängigkeit von den Druckverhältnissen im hydrodynamischen Kreis 24 sowie in der Kammer 55 zwischen zwei unterschiedlichen Grenzstellungen bewegbar, auf die nachfolgend noch eingegangen wird. Der Kolben 54 ist mittels eines auf der Zapfennabe 12 gelagerten Kolbenfußes 52 axial verschiebbar, wobei eine in der Zapfennabe 12 eingelassene Kolbendichtung 50 ihre Abdichtfunktion gegenüber dem Kolbenfuß 52 wahrnimmt. Im radial inneren Bereich des Kolbens 54 ist dieser über Tangentialblattfedern 58 mittels einer Nietverbindung 62 an einer Aufnahmevorrichtung 60 befestigt, die an der Zapfennabe 12 befestigt ist.

Axial zwischen dem Wandlerdeckel 7 und dem Kolben 54 ist, im radial äußeren Bereich des letztgenannten, eine Lamelle 65 angeordnet, die über einen Reibbelagträger 66 und beidseits an demselben aufgenommene Reibbeläge 68 verfügt, wobei durch jeden Reibbelag 68 je ein Reibbereich bereitgestellt wird. Der Reibbelagträger 66 ist an seinem Außenumfang - in Umfangsrichtung gesehen - mit Verzahnungen 72 versehen, die mit Gegenverzahnungen 74 einer Drehsicherung 76 verbunden sind. Die Letztgenannte wiederum ist an der Turbinenschale 21 befestigt. Es bleibt anzumerken, dass der Reibbelagträger 66 und damit die Lamelle 65 über die Zapfennabe 12 Verzahnungen 72/Gegenverzahnungen 74 in drehfester, aber axial relativ bewegbarer Verbindung zur Drehsicherung 76 steht.

Der Kolben 54 bildet im radial äußeren Bereich an seiner dem Wandlerdeckel 7 zugewandten Seite einen die Drehachse 3 ringförmig umschließenden, dem Reibbereich 69 des benachbarten Reibbelags 68 zugewandten Gegenreibbereich 70. Ebenso bildet der Wandlerdeckel 7 mit seiner dem benachbarten Reibbeiag 68 zugewandten Seite einen Gegenreibbereich 70. Die einzelnen Reibbereiche 69 und Gegenreibbereiche 70 sind miteinander in kraftschlüssige Verbindung bringbar, sofern im hydrodynamischen Kreis 24 ein höherer Druck als in der Kammer 55 an der Gegenseite des Kolbens 54 anliegt. Die Reibbereiche 69 und die Gegenreibbereiche 70 sind in der Einzelheit X in Fig. 1 a hervorgehoben.

In bekannter Weise ist der Kolben 54 zwischen zwei möglichen Grenzstellungen axial bewegbar, wobei eine erste Grenzstellung erreicht ist, wenn die Reibbeläge 68 mit ihren Reibbereichen 69 kraftschlüssig an den jeweiligen Gegenreibbereichen 70 zur Anlage gekommen sind. Die zweite Grenzstellung wird dagegen eingenommen, wenn in der Kammer 55 ein höherer Druck anliegt als im hydrodynamischen Kreis 24 und der Kolben 54 demnach gegen die Wirkung der Tangentialblattfedern 58, die den Kolben 54 zum Wandlerdeckel 7 drücken wollen, axial verlagert wird, bis er an einem Anschlag 64 der Aufnahmevorrichtung 60 zur Anlage kommt.

Zurückkommend auf die Einzelheit X, ist in dieser eine Schnittlinie II-II (Fig. 1) eingezeichnet. Bezogen auf die Blickrichtung gemäß dieser Schnittlinie ist der dem Wandlerdeckel 7 zugewandte Reibbelag 68 sowie der Reibbelagträger 66 der Lamelle 65 einsehbar, wobei Fig. 2 eine vergrößerte Herauszeichnung eines Segmentes dieses Reibbelags 68 sowie des Reibbelagträgers 66 zeigt. Dieses Segment des Reibbelages 68 lässt eine Aussparung 80 erkennen, die sich bezüglich ihrer Außenkontur 81 im Wesentlichen bogenförmig im Reibbelag 68 erstreckt und zwar, ausgehend von einem Zuflussbereich 82 an der inneren Radialseite 96 des Reibbelages 68 nach radial außen, um von einem Scheitelpunkt 83 aus wiederum nach radial innen zu führen, und zwar zu einem Abflussbereich 84, der ebenso wie der Zuflussbereich 82 an der inneren Radialseite 96 des Reibbelages 68 mündet. Bei einer derartigen Form der Aussparung 80 verbleibt im radial äußeren Bereich des Reibbelages 68, also radial zwischen dem Scheitelpunkt 83 und einer äußeren Radialseite 97, ein aussparungsfreier Reibring 100, der, sofern der Reibbelag 68 in Anlage am Wandlerdeckel 7 steht, eine begrenzte Dichtwirkung ausübt.

Sowohl in Fig. 1 a als auch in Fig. 2 ist zusätzlich zu dem zuvor erläuterten Reibbelag 68 auch der Reibbelagträger 66 der Lamelle 65 eingezeichnet, der über eine Ausnehmung 88 verfügt, die ebenso wie die Aussparung 80 des Reibbelages 68 sich bezüglich ihrer Außenkontur 104 im Wesentlichen bogenförmig im Reibbelagträger 66 erstreckt und zwar, ausgehend von einem Zuflussbereich 82 an der inneren Radialseite 94 des Reibbelagträgers 66 nach radial außen, um von einem Scheitelpunkt 96 aus wiederum nach radial innen zu führen, und zwar zu einem Abflussbereich 84, der ebenso wie der Zuflussbereich 82 an der inneren Radialseite 94 des Reibbelagträgers 66 mündet. Die Ausnehmung 88 des Reibbelagträgers 66 ist hierbei sowohl bezüglich ihrer Geometrie als auch im Hinblick auf ihre Abmessungen im Wesentlichen an die Aussparung 80 im Reibbelag 68 angepasst und daher mit derselben deckungsgleich.

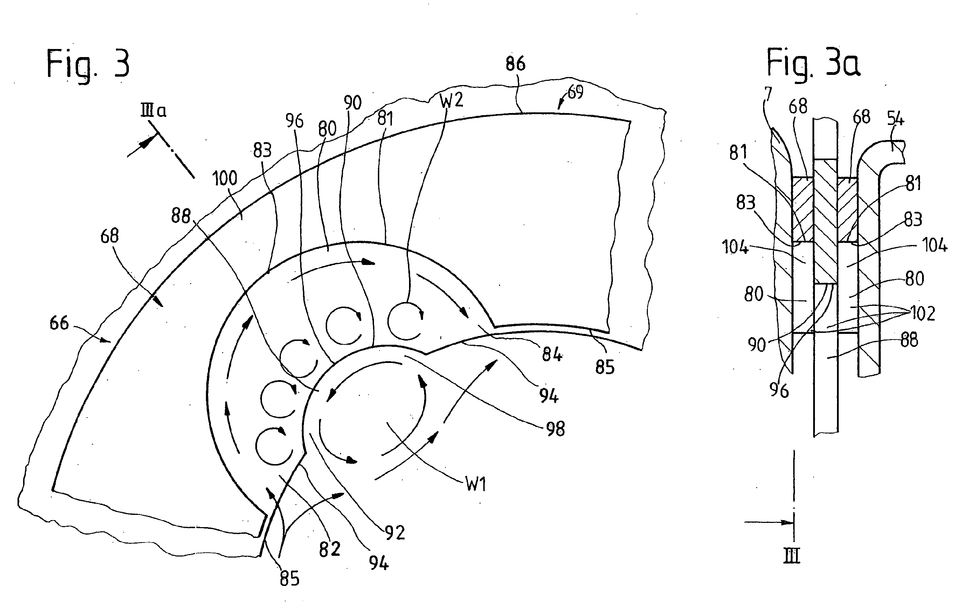

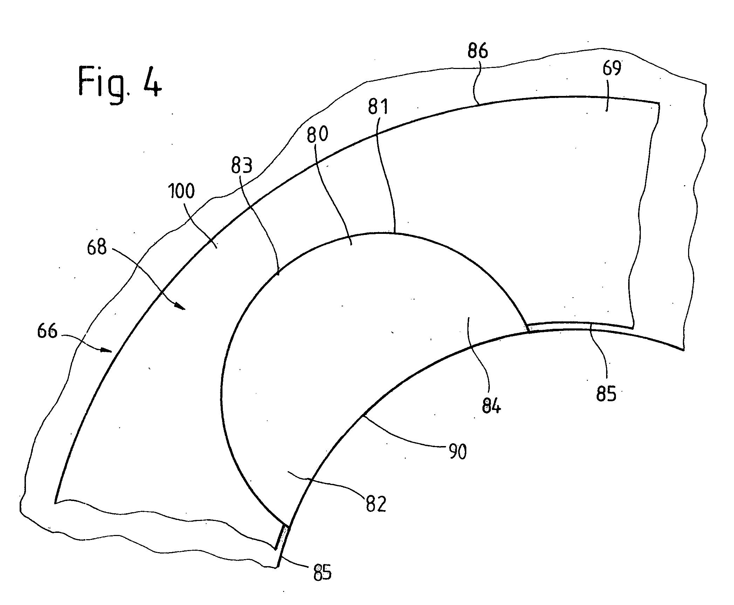

Die Ausbildung des jeweiligen Reibbelages 68 sowie des Reibbelagträgers 66 näher betrachtend, wird bei der nachfolgenden Beschreibung von der in Fig. 2 linken Seite ausgegangen, und zwar unter der Vorstellung, dass der Reibbelag 68 und damit der diesen aufnehmende Reibbelagträger 66 eine Drehbewegung in einer Drehrichtung ausführt, in welcher die Aussparung 80 des Reibbelages 68 ihren Zuflussbereich 82 links und ihren Abflussbereich 84 rechts aufweist. Demzufolge wird, bezogen auf Fig. 2, der Reibbelag 68 im Gegenuhrzeigersinn bewegt. In den Fig. 3, 4 und 5 ist die Drehrichtung ebenso gewählt, wobei die Fig. 3 und 4 weitere Ausführungen der Erfindung zeigen, Fig. 5 dagegen die Strömungsverhältnisse beim Stand der Technik, wie sie beispielsweise bei den Aussparungen gemäß der eingangs erwähnten DE 100 08 167 A1 auftreten.

Die Fig. 2 betrifft eine Ausführung, bei welcher im Reibbelagträger 66 eine Ausnehmung 88 vorgesehen ist, die bezüglich ihrer Geometrie und ihrer Abmessungen im Wesentlichen an die Aussparung 80 im Reibbelag 68 angepasst ist. Aus diesem Grund ist die Ausnehmung 88 des Reibbeiagträgers 66 in Fig. 2 lediglich an denjenigen Stellen erkennbar, an denen die Ausnehmung 88 mit ihrer Außenkontur 90 die jeweils benachbarte innere Radialseite 94 erreicht, die radial geringfügig weiter nach radial innen gezogen sein kann als die innere Radialseite 85 des Reibbelages 68. Da der übrige Bereich der Außenkontur 90 gemäß Fig. 2 durch den Reibbelag 68 verdreht ist, ist ein Scheitelpunkt 96 der Ausnehmung 88 lediglich mit gestrichelter Bezugszeichenlinie eingezeichnet. Ebenso wie bei der Außenkontur stimmt die Ausnehmung 88 auch bezüglich ihres Zuflussbereiches 92 mit dem Zuflussbereich 82 der Aussparung 80 und bezüglich ihres Abflussbereiches 98 mit dem Abflussbereich 84 der Aussparung 80 überein. Zum besseren Verständnis sei auf die Fig. 1 a verwiesen, in welcher die in Fig. 2 mit 1a bezeichnete Schnittlinie zeichnerisch dargestellt ist. Insbesondere aus dieser Fig. 1a ist erkennbar, dass aufgrund der Anpassung der Ausnehmung 88 an die Aussparungen 80 radial innerhalb der Scheitelpunkte 83 der Reibbeläge 68 sowie radial innerhalb des Scheitelpunktes 96 des Reibbelagträgers 66 ein sich in Achsrichtung zwischen dem Wandlerdeckel 7 und dem Kolben 54 erstreckender Wirbelraum 102 ausbildet, dem die nachfolgend beschriebene Funktion zukommt:

An den inneren Radialseiten 85 und 94 der Reibbeläge 68 sowie des Reibbelagträgers 66 entlang strömendes kühles Fördermedium gelangt im Zuflussbereich 82 der Aussparungen 80 und im Zuflussbereich 92 der Ausnehmung 88 in die Aussparungen 80 sowie in die Ausnehmung 88 und versucht dort, entlang der Außenkonturen 81 der Aussparungen 80 sowie entlang der Außenkontur 90 der Ausnehmung 88 zu strömen. Aufgrund des Anhaftens dieses kühlen Fördermediums an den Außenkonturen 81, 90 entsteht eine Grenzschicht mit einem Geschwindigkeitsgefälle zwischen außenkonturnahen Strömungsbereichen und außenkonturferneren Strömungsbereichen. Aufgrund dieses Geschwindigkeitsgefälles wird die Ausbildung eines Wirbels W1 begünstigt, der bei optimaler Ausbildung der Aussparungen 80 sowie der Ausnehmung 88 bezüglich deren Geometrie und Dimensionierung mit Vorzug den gesamten Bereich der Aussparungen 80 sowie der Ausnehmung 88 ausfüllt und zudem, da er sich in Achsrichtung über beide Reibbeläge 68 und den Reibbelagträger 66 erstrecken kann, relativ energiereich sein kann. Aufgrund der im Wirbelbereich heftigen Durchmischung von bereits in den Aussparungen 80 sowie in der Ausnehmung 88 enthaltenen, bewegten Fördermediums mit stets frischem, nachgeführten Fördermedium entsteht exakt dort, wo eine Kühlfunktion benötigt wird, nämlich im Erstreckungsbereich der Reibbeläge, eine Zone mit kühlem Fördermedium und turbulenzbedingten hohen Möglichkeiten zur Wärmeaufnahme von den radial benachbarten Reibbelägen 68 einerseits, vom radial benachbarten Reibbelagträger 66 andererseits. Auf diese Weise aus dem Reibbereich aufgenommene Wärme kann unverzüglich an einen den Wirbel W1 radial innerhalb passierenden Volumenstrom kühlenden Fördermediums abgegeben und damit aus dem Erstreckungsbereich der Aussparungen 80 sowie der Ausnehmung 88 abtransportiert werden.

Die Ausführung gemäß Fig. 3 weicht von derjenigen nach Fig. 2 dadurch ab, dass die Ausnehmung 88 im Reibbelagträger 66 zwar bezüglich ihrer geometrischen Ausbildung im Wesentlichen an die Aussparungen 80 der Reibbeläge 68 angepasst ist, im Hinblick auf ihre Dimensionierung allerdings erheblich kleiner ausgelegt ist. Damit wird der Wirbelraum 102, dessen Erstreckungsweite aus Fig. 3a erkennbar ist, auf einen vergleichsweise kleinen Bereich begrenzt, nämlich auf einen Bereich radial innerhalb der Außenkontur 90 der Ausnehmung 88. Somit entsteht im wesentlichen im Erstreckungsbereich der Ausnehmung 88 ein Wirbel W1, während auch bei dieser konstruktiven Ausführung der bereits beschriebene Effekt des Anhaftens von Fördermedium an den Außenkonturen 81 der Aussparungen 80 stattfindet und damit im Radialbereich dieser Außenkonturen 81 ein Geschwindigkeitsgefälle beim durchströmenden Fördermedium entsteht. Als Konsequenz aus diesem Geschwindigkeitsgefälle und dem Wirbel W1 im Bereich der Ausnehmung 88 bilden sich im dazwischen liegenden Radialbereich kleinere Wirbel W2 aus, welche den großen Wirbel W1 radial umlagern. Diese Wirbel W2 sind nicht nur bezüglich ihrer Umfangserstreckung kleiner als der Wirbel W1, sondern verfügen darüber hinaus über eine wesentlich geringere axiale Erstreckung, da sie sich lediglich jeweils über den Querschnitt des betreffenden Reibbelages 68 ausdehnen können. Wie Fig. 3a zeigt, steht demnach jeweils ein axial kleiner Wirbelraum 104 für jeweils eine Mehrzahl dieser kleineren Wirbel W2 zur Verfügung, während radial innerhalb derselben der axial große Wirbelraum 102 für den Wirbel W1 vorgesehen ist.

Bei dieser Ausführung bewirkt der große Wirbel W1 aufgrund heftiger Durchmischung jeweils mit kühlem Fördermedium, welches den Wirbel W1 radial innerhalb passiert, eine starke Wärmeaufnahme insbesondere im Bereich der Außenkontur 90 der Ausnehmung 88. Weiterhin vermag der große Wirbel W1 aber auch Wärme von den kleinen Wirbel W2 aufzunehmen, die ihrerseits nicht nur von der Außenkontur 81 der jeweiligen Aussparung 80 der Reibbeläge 68 gelieferte Wärme aufnehmen, sondern in besonderem Maße axial an beiden Seiten des Reibblagträgers 66, soweit dieser in den Erstreckungsbereich der Aussparungen 80 ragt. Da der Reibbelagträger 66 üblicherweise aus einem metallischen Werkstoff besteht und daher über gute Wärmeleiteigenschaften verfügt, ist bei dieser Ausführung trotz geringerer Verwirbelung als bei der Ausführung nach Fig. 2 für eine gute Aufnahme sowie den Abtransport von Wärme im Fördermedium gesorgt.

Die in Fig. 4 gezeigte Ausführung unterscheidet sich von derjenigen nach Fig. 3 durch den völligen Verzicht auf eine Ausnehmung 88 im jeweiligen Erstreckungsbereich der Aussparungen 80 der Reibbeläge 68. Verständlicherweise wird bei einer derartigen Ausführung der große Wirbel W1 auf einen Restanteil reduziert sein, während den kleinen Wirbeln W2 eine nochmals höhere Bedeutung zukommt.

### Bezugszeichenliste

- 1.: hydrodyn. Drehmomentwandler
- 3.: Drehachse
- 5.: Wandlergehäuse
- 7.: Wandlerdeckel
- 9.: Pumpenschale
- 11.: Pumpenradnabe
- 12.: Zapfennabe
- 13.: Lagerzapfen
- 15.: Befestigungsaufnahme
- 16: Pumpenradschaufeln
- 17.: Pumpenrad
- 19.: Turbinenrad
- 21.: Turbinenradschale
- 22: Turbinenradschaufeln
- 23.: Leitrad
- 24.: hydrodynamischer Kreis
- 25.: lnnentorus
- 26.: Leitradnabe
- 27.: Freilauf
- 28: Leitradschaufeln
- 29.: Axiallagerung
- 30.: Stützwelle
- 31.: Turbineradfluss
- 32: Verzahnung
- 33.: Turbinennabe
- 34: Verzahnung
- 35.: Axiallagerung
- 36.: Getriebeeingangswelle
- 37.: Mittenbohrung
- 38.: Abdichtung
- 39.: Abdichtung
- 40.: Übergangsraum
- 42.: Strömungsdurchlass
- 44.: Axiallagerung
- 46.: Kanäle
- 48.: Zentrierfläche
- 50.: Abdichtung
- 52.: Kolbenfuß
- 54.: Kolben
- 55.: Kammer
- 56.: Überbrückungskupplung
- 58.: Tangentialblattfedern
- 60.: Aufnahmevorrichtung
- 62,63: Nietverbindung
- 64.: Anschlag
- 65.: Lamelle
- 66.: Reibbelagträger
- 68.: Reibbelag
- 69.: Reibbereich
- 70.: Gegenreibbereich
- 72.: Verzahnungen
- 74.: Gegenverzahnungen
- 76: Drehsicherung
- 78.: Halterung
- 80.: Aussparungen
- 81: Außenkontur
- 82.: Zuflussbereich
- 83: Scheitelpunkt
- 84.: Abflussbereich
- 85.: innere Radialseite
- 86.: äußere Radialseite
- 88.: Ausnehmung
- 90.: Außenkontur
- 92.: Zuflussbereich
- 94.: innere Radialseite
- 96.: Scheitelpunkt
- 98.: Abflussbereich
- 100.: unterbrechungsfreier Reibring
- 102.: großer Wirbelraum
- 104.: kleiner Wirbelraum

## Patentansprüche

1. Überbrückungskupplung für einen hydrodynamischen Drehmomentwandler mit zumindest einem an einem ersten Wandlerbauteil vorgesehenen Reibbereich, der durch eine Einrückbewegung mit wenigstens einem an einem zweiten Wandlerbauteil vorgesehenen Gegenreibbereich in Wirkverbindung versetzbar oder durch eine der Einrückbewegung entgegengerichtete Ausrückbewegung von diesem Gegenreibbereich trennbar ist, wobei wenigstens eines der beiden Wandlerbauteile als Reibbelagträger wirksam ist und im Reibbereich oder im Gegenreibbereich jeweils einen Reibbelag mit wenigstens einer zum Durchgang von Fördermedium dienenden Aussparung aufnimmt, deren Zuflussbereich an der gleichen Radialseite des Reibbelags wie deren Abflussbereich mündet,
**dadurch gekennzeichnet,**
**dass** an zumindest einem der als Reibbelagträger (66) dienenden Wandlerbauteile (7, 54, 132) wenigstens ein Reibbelag (68) mit einer Aussparung (80) versehen ist, die an der den Zuflussbereich (82) und den Abflussbereich (84) aufweisenden Radialseite (96) des Reibbelags (68) entlang ihrer gesamten Erstreckungsweite in Umfangsrichtung durchgängig offen ist.

2. Überbrückungskupplung nach Anspruch 1
**dadurch gekennzeichnet,**
**dass** der den Reibbelag (68) mit der Aussparung (80) aufnehmende Reibbelagträger (66) im Erstreckungsbereich der Aussparung (80) eine Ausnehmung (88) aufweist, die bezüglich ihrer Geometrie und ihrer Abmessungen im wesentlichen an die Aussparung (80) im Reibbelag (68) angepasst ist.

3. Überbrückungskupplung nach Anspruch 1,
**dadurch gekennzeichnet,**
**dass** der den Reibbelag (68) mit der Aussparung (80) aufnehmende Reibbelagträger (66) im Erstreckungsbereich der Aussparung (80) eine Ausnehmung (88) aufweist, die bezüglich ihrer Geometrie im wesentlichen an die Aussparung (80) im Reibbelag (68) angepasst ist, gegenüber dieser allerdings über kleinere Abmessungen verfügt.

4. Überbrückungskupplung nach einem der Ansprüche 1 bis 3 mit zumindest einer axial zwischen zwei anderen Wandlerbauteilen, wie Wandlerdeckel oder Kolben, angeordneten Lamelle, welche über einen Reibbelagträger und an den Axialseiten desselben über jeweils einen Reibbelag mit einem Reibbereich oder einem Gegenreibbereich verfügt,
**dadurch gekennzeichnet**,
die Reibbeläge (68) derart zueinander ausgerichtet und dimensioniert sind, dass die Aussparungen (80) beider Reibbeläge (68) im wesentlichen miteinander deckungsgleich sind, und außerdem die Reibbeläge (68) an dem Reibbelagträger (66) jeweils in einer Position aufgenommen sind, in welcher dessen Ausnehmung (88) eine Strömungsverbindung zwischen den beiden Aussparungen (80) bildet.

5. Überbrückungskupplung nach Anspruch 4,
**dadurch gekennzeichnet,**
**dass** die Reibbeläge (68) jeweils derart am Reibbelagträger (66) aufgenommen sind, dass die Ausnehmung (88) des letztgenannten innerhalb des umfangsgemäßen Erstreckungsbereichs der Aussparungen (80) angeordnet ist.

6. Überbrückungskupplung nach Anspruch 1,
**dadurch gekennzeichnet,**
**dass** der den Reibbelag (68) mit der Aussparung (80) aufnehmende Reibbelagträger (66) im Erstreckungsbereich der Aussparung (80) unterbrechungsfrei ausgebildet ist.

7. Überbrückungskupplung nach Anspruch 1 oder 5 mit zumindest einer axial zwischen zwei anderen Wandlerbauteilen, wie Wandlerdeckel oder Kolben, angeordneten Lamelle, welche über einen Reibbelagträger und an den Axialseiten desselben über jeweils einen Reibbelag mit einem Reibbereich oder einem Gegenreibbereich verfügt,
**dadurch gekennzeichnet**,
die Reibbeläge (68) zumindest im Erstreckungsbereich der jeweiligen Aussparung (80) durch den Reibbelagträger (66) gegeneinander strömungsisoliert sind.

8. Überbrückungskupplung nach Anspruch 7 mit einem im wesentlichen ringförmigen Reibbelagträger,
**dadurch gekennzeichnet,**
**dass** die Reibbeläge (68) am Reibbelagträger (66) derart zueinander ausgerichtet und dimensioniert sind, dass die Aussparungen (80) beider Reibbeläge (68) im wesentlichen deckungsgleich miteinander sind, wodurch radial benachbart zur Grenze der Radialerstreckung des Reibbelagträgers (66) jeweils im umfangsgemäßen Erstreckungsbereich der Aussparungen (80) eine Strömungsverbindung zwischen denselben herstellbar ist.

9. Überbrückungskupplung nach zumindest einem der Ansprüche 1 bis 8 mit einer Ausnehmung im jeweiligen Reibbelag, deren radiale Außenkontur sich, ausgehend von einem Scheitelpunkt, in einander entgegengesetzten Richtungen im wesentlichen nach radial innen erstreckt und sich dort sowohl mit ihrem Zuflussbereich als auch mit ihrem Abflussbereich nach radial innen öffnet.
**dadurch gekennzeichnet,**
**dass** am jeweiligen Reibbelag (68) jeweils radial innerhalb der Außenkontur (81) einer Aussparung (80) auf eine radiale Begrenzung der Ausnehmung (80) verzichtet ist.

10. Überbrückungskupplung nach einem der Ansprüche 1 bis 5 und 9,
**dadurch gekennzeichnet,**
**dass** der Reibbelagträger (66) jeweils eine Ausnehmung (88) aufweist, deren radiale Außenkontur (90) sich, ausgehend von einem Scheitelpunkt (96), in einander entgegengesetzten Richtungen im wesentlichen nach radial innen erstreckt, und am Reibbelagträger (66) jeweils radial innerhalb der Außenkontur (90) einer Ausnehmung (88) auf eine radiale Begrenzung der Aussparung (80) verzichtet ist.

11. Überbrückungskupplung nach Anspruch 9 und 10,
**dadurch gekennzeichnet,**
**dass** die radiale Außenkontur (81) der Aussparung (80) des jeweiligen Reibbelages (68) im wesentlichen der radialen Außenkontur (88) der Ausnehmung (88) im Reibbelagträger (66) entspricht und mit derselben im wesentlichen deckungsgleich ist.

12. Überbrückungskupplung nach Anspruch 11,
**dadurch gekennzeichnet,**
**dass** der Scheitelpunkt (83) der radialen Außenkontur (81) der Aussparung (80) des jeweiligen Reibbelages (68) radial außerhalb des Scheitelpunktes (96) der radialen Außenkontur (90) der Ausnehmung (88) im Reibbelagträger (66) verläuft.

13. Überbrückungskupplung nach Anspruch 12,
**dadurch gekennzeichnet,**
**dass** die Aussparung (80) des jeweiligen Reibbelages (68) mit ihrer radialen Außenkontur (81) im Zuflussbereich (82) und im Abflussbereich (84) jeweils im wesentlichen auf dem gleichen Radialabschnitt endet wie die Ausnehmung (88) des Reibbelagträgers (66) mit ihrer radialen Außenkontur (90) im Zuflussbereich (92) und im Abflussbereich (98).

14. Überbrückungskupplung nach Anspruch 12 oder 13,
**dadurch gekennzeichnet,**
**dass** die Aussparung (80) des jeweiligen Reibbelages (68) in ihrer umfangsgemäßen Erstreckungsrichtung größer ausgebildet ist als die Ausnehmung (88) des Reibbelagträgers (66).
